# EUROPEAN PATENT APPLICATION

(11) **EP 4 563 432 A1**
(43) Date of publication of application: **04.06.2025**
(21) Application number: 22952461.6
(22) Date of filing: 29.07.2022
(51) Int. Cl.: B60W 50/00

(54) **CONTROL SYSTEM APPLIED TO VEHICLE, AND VEHICLE**

(71) Applicant: Shenzhen Yinwang Intelligent Technologies Co., Ltd., Shenzhen, Guangdong 518129 (CN)
(72) Inventor: WU, Zeliang, Shenzhen, Guangdong 518129 (CN); WANG, Xingwu, Shenzhen, Guangdong 518129 (CN); JIN, Yuhui, Shenzhen, Guangdong 518129 (CN)
(74) Representative: Thun, Clemens
(86) International application number: PCT/CN2022/108904
(87) International publication number: WO 2024/021010

(57) **Abstract**

This application provides a control system applied to a vehicle and a vehicle. The control system includes at least one processor, a first memory, and a second memory. The first memory is connected to the at least one processor in a pluggable manner, and the second memory is fixedly connected to the at least one processor. The first memory is configured to store first data, the second memory is configured to store second data, an update degree of the first data and an update degree of the second data are different, and the update degree includes an update frequency and/or an importance degree. This can meet a high storage requirement of the vehicle, and ensure accurate driving control and safe driving of an intelligent vehicle.

## Description

### TECHNICAL FIELD

This application relates to the field of intelligent vehicle technologies, and in particular, to a control system applied to a vehicle and a vehicle.

### BACKGROUND

With the development of intelligent vehicle technologies, especially with the development of unmanned driving technologies, more data needs to be stored in a vehicle, and a data update frequency is increasingly high. This imposes an increasingly high requirement on a storage unit in the vehicle. An existing storage unit in the vehicle cannot meet an increasingly high storage requirement.

### SUMMARY

Embodiments of this application disclose a control system applied to a vehicle and a vehicle, to meet an increasingly high storage requirement.

According to a first aspect, this application provides a control system applied to a vehicle, where the control system includes at least one processor, a first memory, and a second memory, the first memory is connected to the at least one processor in a pluggable manner, and the second memory is fixedly connected to the at least one processor.

The first memory is configured to store first data, the second memory is configured to store second data, an update degree of the first data and an update degree of the second data are different, and the update degree includes an update frequency and/or an importance degree.

Optionally, the fixed connection may be a connection manner such as welding. Optionally, the first memory is a solid state drive SSD memory card, and the second memory is a universal flash storage UFS memory.

In an existing solution, a memory in a control system in a vehicle cannot be replaced, and a problem of a quantity of erase and write times of the memory needs to be considered. Consequently, timely update and storage of data such as map data or road condition data are affected, and accuracy of driving control of an intelligent vehicle is affected. In this solution, the control system applied to the vehicle includes a memory connected in a pluggable manner, so that the memory can be easily and quickly replaced in a timely manner. Therefore, data in the memory can be updated in a timely manner without considering a problem that a quantity of erase and write times of the memory is used up. This meets a storage requirement for a high data update frequency, and ensures accurate driving control and safe driving of an intelligent vehicle.

In addition, compared with an existing solution of a pluggable memory (for example, a solution of a pluggable USB flash drive on a computer), the solution of the pluggable memory in this application meets a vehicle regulation requirement. For example, both an interface of the pluggable memory included and an inserted memory in the foregoing control system in a vehicle meet the vehicle regulation requirement. For example, in addition to a circuit plug-in and plug-out connection, the interface and the memory may be further fixedly connected by using a fastening component such as a bolt (bolt connection), a fastener (buckle connection), or a magnet (magnetic suction connection). In this way, it can be ensured that the pluggable memory is not likely to fall off in a driving process of the vehicle, and data and driving safety are ensured.

Optionally, the first data includes map data and/or road condition data.

In this application, the map data or the road condition data with a high update frequency may be stored in the pluggable memory, so that data can be updated without concern, to better meet a requirement of intelligent driving. In addition, optionally, the first memory may be further configured to store operating system software and/or an application of the vehicle. In this way, an application range of the pluggable memory can be extended.

Optionally, the second data includes the operating system software and/or the application of the vehicle.

In this application, important data such as the operating system software or the application is stored in a fixedly connected memory, so that stability and reliability of storage of the system software or the application can be improved.

In a possible implementation, the first memory and the second memory meet at least one of the following:
a storage capacity of the first memory is greater than a storage capacity of the second memory;
an update frequency of the first memory is higher than an update frequency of the second memory; and
an importance degree of the first data in the first memory is lower than an importance degree of the second data in the second memory.

In this application, the first memory is a pluggable memory, and has a larger capacity or a higher update frequency, so that necessary assurance can be provided for fast data update. The second memory is a memory that is fixedly connected, and can ensure stability and reliability of stored data. Therefore, the second memory may be used to store data with high importance, to ensure security of important data. Based on the conditions met by the first memory and the second memory, all data that needs to be stored in the vehicle can be properly and reliably stored. In particular, for data such as the map data and/or the road condition data with a high update frequency, the data can be updated and stored in a timely manner without considering a problem of a quantity of erase and write times of the memory. In this way, a storage requirement of intelligent driving is better met, and accurate driving control and safe driving of an intelligent vehicle are ensured.

In a possible implementation, the at least one processor is configured to perform intelligent driving or self-driving control.

In this application, the control system may be an intelligent driving control system or a self-driving control system. The system includes a memory that is connected in a pluggable manner, and the memory can be easily and quickly replaced in a timely manner. Therefore, data in the memory can be updated in a timely manner without considering a problem that a quantity of erase and write times of the memory is used up. This meets a storage requirement for a high data update frequency, and ensures accurate driving control and safe driving of an intelligent vehicle.

In a possible implementation, the at least one processor is configured to send a first alarm signal when a bad block occurs in the first memory, where the first alarm signal is used to indicate to replace the first memory.

In this application, bad block detection may be performed on the pluggable memory, and a user is reminded in a timely manner through an alarm to replace the memory in a timely manner, to reduce a data loss and ensure safe driving of the vehicle. Compared with bad block detection in an existing common memory, the pluggable memory in this application stores important data used for driving assistance, such as the map data and/or the road condition data. The bad block detection in this application can detect a problem of the pluggable memory in a timely manner, to replace the pluggable memory in a timely manner and reduce a data loss. Therefore, the bad block detection alarm in this application is a strong guarantee for safe driving control of the vehicle.

Optionally, that the at least one processor is configured to send a first alarm signal when a bad block occurs in the first memory includes: The at least one processor is configured to send the first alarm signal by using a central control screen of the vehicle when the bad block occurs in the first memory.

In this application, by using a solution in which the central control screen sends an alarm, the user can be more intuitively and clearly notified that the memory needs to be replaced in a timely manner. Therefore, a loss of data used for assisting driving is reduced, to ensure safe driving of the vehicle.

In a possible implementation, the at least one processor is configured to send a second alarm signal when the first memory is not successfully connected to the at least one processor, where the second alarm signal is used to indicate that the first memory is not successfully connected to the at least one processor.

Optionally, the first memory is connected to the at least one processor by using a connector, a first pin and a second pin that are included in the connector are connected to the first memory and the at least one processor, and the at least one processor is specifically configured to:
detect level signals of the first pin and the second pin; and
send the second alarm signal when at least one of the level signals of the first pin and the second pin is a low level signal.

In this application, it is detected whether the first memory is securely inserted, to ensure that the memory is successfully connected to the at least one processor, to further ensure that data can be successfully stored, and avoid a data loss. The pluggable memory in this application stores important data used for assisting driving, such as the map data and/or the road condition data. The memory insertion detection in this application can detect in a timely manner whether the pluggable memory is securely inserted, to securely insert the pluggable memory in a timely manner, and reduce a data loss. Therefore, the memory insertion detection alarm in this application is a strong guarantee for safe driving control of the vehicle.

According to a second aspect, this application provides a vehicle. The vehicle includes the control system according to any one of the implementations of the first aspect.

The control system of the vehicle includes a memory connected in a pluggable manner, so that the memory can be easily and quickly replaced in a timely manner. Therefore, data in the memory can be updated in a timely manner without considering a problem that a quantity of erase and write times of the memory is used up. This meets a storage requirement for a high data update frequency, and ensures accurate driving control and safe driving of an intelligent vehicle.

### BRIEF DESCRIPTION OF DRAWINGS

FIG. 1 is a schematic diagram of a structure of a control system according to this application;
FIG. 2 is a schematic diagram of a circuit connection of a connector according to this application;
FIG. 3 is a schematic diagram of a procedure of memory insertion detection according to this application;
FIG. 4 is a schematic diagram of a clock signal flow direction in a control system according to this application;
FIG. 5 is a schematic diagram of a structure of a self-driving system according to this application;
FIG. 6 is a schematic diagram of a procedure of bad block detection of a memory according to this application; and
FIG. 7 is a schematic diagram of a structure of a vehicle according to this application.

### DESCRIPTION OF EMBODIMENTS

In embodiments of this application, "a plurality of" refers to two or more than two. In embodiments of this application, "and/or" is used to describe an association relationship between associated objects and represents three relationships that may exist independently. For example, A and/or B may represent the following: Only A exists, only B exists, or both A and B exist. A description manner such as "at least one item (or at least one) of a1, a2, ..., and an" used in embodiments of this application includes a case in which any one of a1, a2, ..., and an exists alone, and also includes any combination of any plurality of a1, a2, ..., and an. Each case may exist alone. For example, a description manner of "at least one of a, b, and c" is used, including a case of a single a, a single b, a single c, a combination of a and b, a combination of a and c, a combination of b and c, or a combination of a, b, and c.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The following describes embodiments of this application with reference to the accompanying drawings.

With continuous development of an intelligent vehicle, especially in semi-self-driving or self-driving scenarios, the vehicle needs to collect and store more data, and more data needs to be updated frequently. Data update requires an erase and write operation on a memory, and a higher update frequency indicates a larger quantity of erase and write times. However, a quantity of erase and write times of the memory is limited, and if the quantity of erase and write times exceeds a maximum quantity of erase and write times that can be provided by the memory, the memory is damaged, and a problem such as a data loss is caused. In an existing solution, to protect a memory, data update is limited. As a result, the data cannot be updated in a timely manner, and the vehicle cannot drive the vehicle in a timely manner based on latest data. Consequently, accuracy of driving control and driving safety of the vehicle are affected. To improve accuracy of driving control and driving safety of the vehicle, an embodiment of this application provides a control system applied to a vehicle.

In this embodiment of this application, the foregoing data with a high update frequency that appears with the development of the intelligent vehicle may be stored by using a pluggable memory. The data is mainly used to assist driving of the vehicle, and is critical to accuracy of driving control and driving safety of the vehicle. However, a current data storage solution in a vehicle cannot meet an update storage requirement of the data. Therefore, this application creatively proposes a storage solution in which the data is stored by using the pluggable memory. Because the memory is pluggable, a new memory can be replaced in a timely manner. Therefore, a problem of a quantity of erase and write times of the memory does not need to be considered, and corresponding data can be updated and stored in a timely manner, to meet a requirement of intelligent and safe driving of the vehicle. Although a pluggable memory, such as a USB flash drive, also exists in another field, most pluggable memories are used for capacity expansion or convenient data transfer, and meet a data storage requirement of a small computing device. In addition, requirements on safety, performance, and data classification are not high. However, the solution for storing data in the pluggable memory provided in this application is based on a requirement such as a vehicle regulation requirement, and is used to store data of a specific classification (for example, data with a high update frequency or data with a high requirement on a quantity of erase and write times of the memory). This ensures that the data is updated and stored in a timely manner, and can ensure accuracy of driving control and driving safety of the vehicle. The following describes embodiments of this application by using examples with reference to the accompanying drawings.

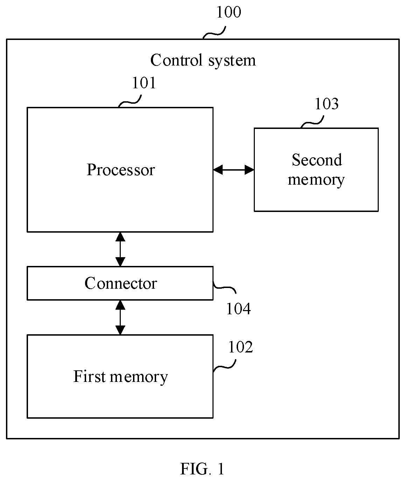

FIG. 1 is a schematic diagram of a structure of a control system 100 applied to a vehicle according to an embodiment of this application. The control system 100 includes a processor 101, a first memory 102, and a second memory 103. The first memory 102 is connected to the processor 101 by using a connector 104. The first memory 102 may be inserted into the connector 104 in a pluggable manner to be connected to the processor 101. The second memory 103 is fixedly connected to the processor 101. For example, the fastened connection may be implemented in an unremovable manner such as welding.

The processor 101 may include one or more processors. The processor has computing and processing capabilities for objects such as data, a signal, or an instruction. For example, the processor may be a central processing unit, a digital signal processor, an application-specific integrated circuit, a field programmable gate array or another programmable logic device, a transistor logic device, a hardware component, or any combination thereof. Alternatively, the processor may be a combination of processors implementing a computing function, for example, a combination of one or more microprocessors or a combination of a digital signal processor and a microprocessor. Alternatively, the processor may be a general purpose processor or the like. In a possible implementation, the processor 101 may be represented as one or more processing chips or systems on chip (system on chip, SOC). In this embodiment of this application, a specific type or an implementation form of the processor is not limited.

The first memory 102 and the second memory 103 may be a power-off saving unit of the control system 100. For example, the first memory 102 may be a solid state drive (solid state drive, SSD) memory card, a pluggable universal flash storage (universal flash storage, UFS) card, a removable hard disk, a USB flash drive, or the like. For example, the second memory 103 may be a UFS, a solid state disk (solid state disk, SSD), or the like. Specific types of the first memory 102 and the second memory 103 are not limited in this embodiment of this application. Memories in which the first memory 102 may be connected to the processor 101 in a pluggable manner, and the second memory 103 is fixedly connected to the processor 101 may be applied to this embodiment of this application.

In this embodiment of this application, the first memory 102 may be configured to store first data. The second memory 103 may be configured to store second data. An update degree of the first data and an update degree of the second data are different. The update degree includes an update frequency of the data and/or an importance degree of the data. To be specific, that the update degree of the first data and the update degree of the second data are different may include any one of the following cases:

In a first case, an update frequency of the first data and an update frequency of the second data are different.

In a second case, an importance degree of the first data and an importance degree of the second data are different.

In a third case, both update frequencies and importance degrees of the first data and the second data are different.

For ease of understanding, for example, the first data may include map data and/or road condition data, and the like. The map data may be map data downloaded to the vehicle, or may be map data collected and recorded by the vehicle in a driving process, or the like. The road condition data may be road condition data downloaded to the vehicle, or may be road condition data collected and recorded by the vehicle in a driving process. The second data may include operating system software of the vehicle and/or an application in the vehicle. Generally, the map data and/or the road condition data and the like need to be continuously updated, so that the vehicle can perform driving control based on latest data, to ensure driving accuracy and safety of the vehicle. In other words, the map data and/or the road condition data are updated at a high frequency. However, for the operating system software and/or the application, the operating system software and/or the application have high stability, and an update frequency is low or even may not be updated. In addition, in an importance degree, the operating system software is more important, and needs to be stored in a more reliable and stable memory. Therefore, the operating system software may be stored in the second memory 103 that is fixedly connected.

In another possible implementation, the first data may include an operating system and/or an application of the vehicle. In other words, the operating system and/or the application may be stored in the first memory 102. The second data may include the map data, the road condition data, and/or the like. In other words, the map data and/or the road condition data may be stored in the second memory 103.

It may be understood that the examples of the first data and the second data do not constitute a limitation on this embodiment of this application. The first data and the second data may be any data stored in the vehicle. A specific range included in the first data and the second data is not limited in this embodiment of this application.

In a possible implementation, the first memory 102 and the second memory 103 may meet at least one of the following cases:

In a first case, a storage capacity of the first memory 102 is greater than a storage capacity of the second memory 103.

In a second case, an update frequency of the first memory 102 is higher than an update frequency of the second memory 103.

In a third case, an importance degree of the first data in the first memory 102 is lower than an importance degree of the second data in the second memory 103.

In a case in which the storage capacity of the first memory 102 is greater than the storage capacity of the second memory 103, during specific implementation, a large storage capacity of the first memory 102 may be designed, so that the first memory 102 may be configured to store large amount of data. In addition, because the first memory 102 is connected to the processor in a pluggable manner, using the first memory 102 to store more data may also facilitate data transfer. In other words, when data is required, the first memory 102 may be removed for quick transfer. Compared with that data needs to be transferred through network transmission, data transfer efficiency can be improved.

In a case in which the update frequency of the first memory 102 is higher than the update frequency of the second memory 103, during specific implementation, because the first memory 102 is connected to the processor 101 in a pluggable manner, when storage space of the first memory 102 is full or a bad block occurs, a new memory may be replaced in a timely manner. In addition, because the first memory 102 may be easily and quickly replaced, a problem that a quantity of erase and write times of the memory is used up does not need to be considered, and data in the memory can be updated in a timely manner. This meets a storage requirement for a high data update frequency, and ensures accurate driving control and safe driving of an intelligent vehicle.

In a case in which the importance degree of the first data in the first memory 102 is lower than the importance degree of the second data in the second memory 103, during specific implementation, important data is usually stored in a fixedly connected memory to avoid loss. Therefore, the importance degree of the data stored in the second memory 103 fixedly connected to the processor 101 may be higher than the importance degree of the data stored in the first memory 102 connected to the processor 101 in a pluggable manner.

In a possible implementation, the connector 104 may be a serial small computer system interface (serial attached SCSI, SAS) connector, a serial advanced technology attachment (serial ATA, SATA) connector, a high-speed serial computer extension peripheral component interconnect express (peripheral component interconnect express, PCIE) connector, or the like.

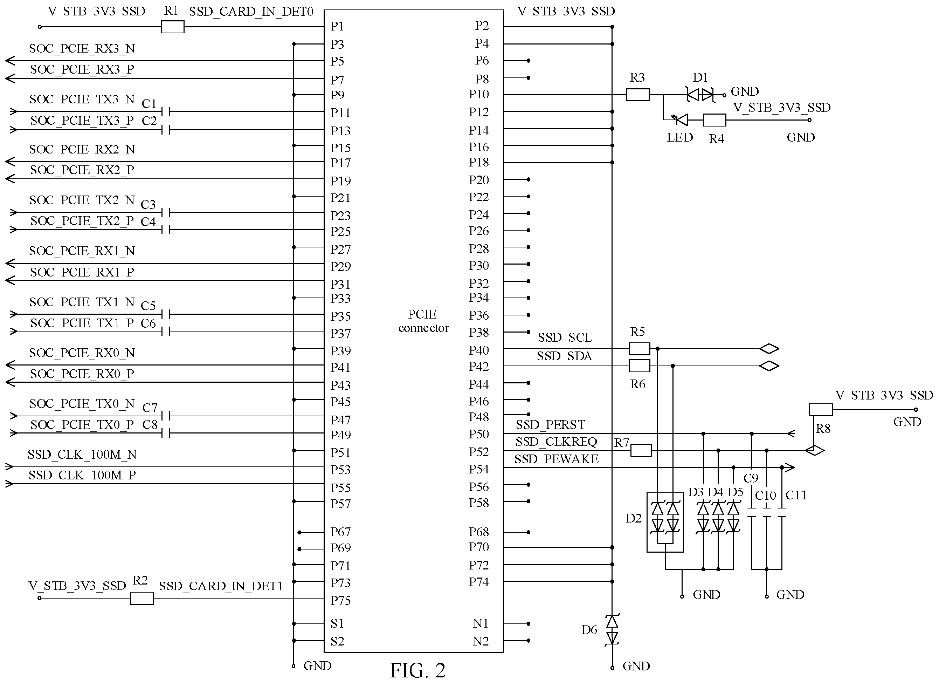

The following describes a specific connection between the first memory 102 and the processor 101 by using an example in which the connector 104 is the PCIE connector. For example, refer to FIG. 2. It can be learned that the PCIE connector includes a plurality of pins (PIN). In FIG. 2, P1, P2, P3, and the like respectively represent a first pin, a second pin, a third pin, and the like. During specific implementation, the PCIE connector may be disposed on a mainboard at which the processor 101 is located. The first memory 102 is connected to the mainboard by using the PCIE connector. For example, the PCIE connector provides 4×lane data channels (SOC_PCIE_RX[3:0]_P/N and SOC_PCIE_TX[3:0]_P/N), a clock signal channel (SOC_CLK_100M_P/N), two signal channels (SSD_CARD_IN_DET[1:0]) indicating whether the first memory 102 is securely inserted, state obtaining signal channels (SSD_SDA and SSD_SCL) of the first memory 102, a reset signal channel (SSD_PERST) of the first memory 102, a clock request channel (SSD_CLKREQ), and a wait signal channel (SSD_PEWAKE).

The PCIE bus is a full-duplex bus. A lane consists of two pairs of differential signal lines, that is, four signal lines. A quantity of lanes is referred to as a bit width, that is, a bit width of the foregoing PCIE connector is 4. In a PCIE clock cycle, the four lanes can receive and transmit four bits at the same time. In SOC_PCIE_RX[3:0]_P/N and SOC_PCIE_TX[3:0]_P/N, "[3:0]" indicates PCIE data channels 0, 1, 2, and 3. In "P/N", "P" indicates a data cable connected to a positive pole, and "N" indicates a data cable connected to a negative pole. "RX" indicates sending, and "TX" indicates receiving. In FIG. 2, SOC_PCIE_RX[3:0]_P/N is configured to receive data from the first memory 102, and send the received data to the processor 101 (a case in which the processor 101 reads data from the first memory 102). SOC_PCIE_TX[3:0]_P/N is configured to send data to the first memory 102 (in a case in which the processor 101 writes data into the first memory 102).

In a specific implementation, the processor 101 may write data into the first memory 102 through the 4×lane data channels, and read data from the first memory 102.

In addition, capacitors, that is, C1, C2, C3, C4, C5, C6, C7, and C8, on the 4×lane data channels may be used to filter out a direct current component, to implement alternating current coupling (AC Coupling).

It may be understood that the bit width 4 of the PCIE connector in FIG. 2 is only an example. During specific implementation, the bit width of the PCIE connector may be 1, 2, or the like. This is not limited in this embodiment of this application.

The clock signal channel is configured to provide a clock signal for the first memory 102. It may be understood that, in FIG. 2, a clock signal channel with a bandwidth of 100 M is used as an example. This does not constitute a limitation on this embodiment of this application, and a bandwidth of the clock signal channel is not limited in this embodiment of this application.

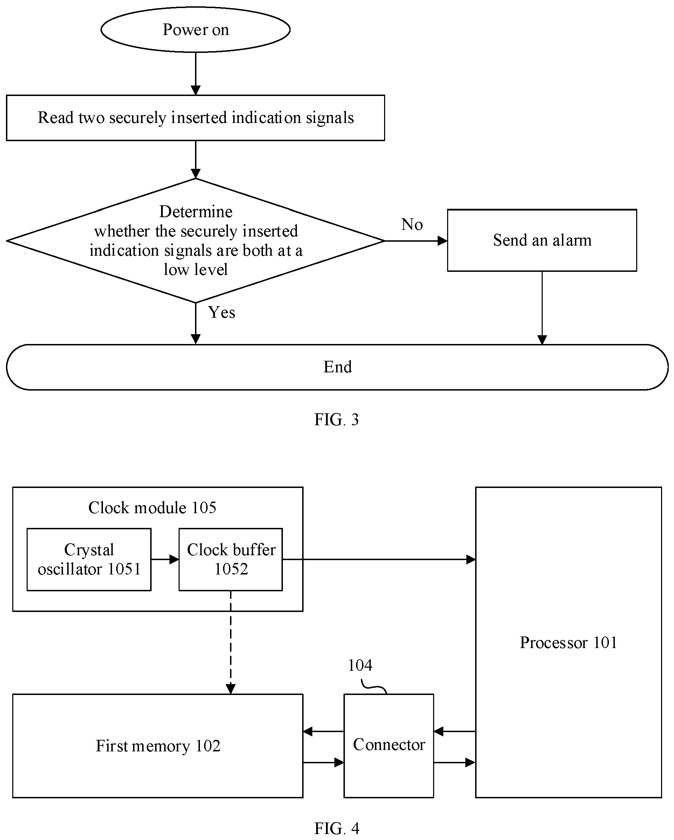

The two signal channels indicating whether the first memory 102 is securely inserted may be used to detect whether the first memory 102 is securely inserted to the processor 101. The two signals indicating whether the first memory 102 is securely inserted may be referred to as securely inserted indication signals for short. Specifically, the two securely inserted indication signals are pulled up to high level signals (for example, pulled up to 3.3 V, which is only an example) on a mainboard side by using resistors R1 and R2 respectively. After the first memory 102 is successfully inserted into the PCIE connector, the two signals are grounded, and are pulled down to low level signals. If the first memory 102 is not successfully inserted into the PCIE connector, at least one of the two signals is a high level signal. Therefore, the processor 101 may determine, by detecting the two signals, whether the first memory 102 is securely inserted. For example, reference may be made to a detection procedure shown in FIG. 3.

In FIG. 3, after being powered on, the processor 101 may read the foregoing two securely inserted indication signals, and determine high and low levels of the two signals. For example, a high level signal may be represented as "1", and a low level signal may be represented as "0". If the two signals are both at a low level, it indicates that the first memory 102 is securely inserted, that is, is successfully inserted into the PCIE connector. If at least one of the two signals is a high level, it indicates that the first memory 102 is not securely inserted, and in this case, an alarm may be sent to remind a user. For example, the processor 101 may send a message to a central control screen of the vehicle, and the central control screen displays prompt information indicating that the first memory 102 is not securely inserted. Alternatively, for example, the processor 101 may indicate to turn on an indicator that is not securely inserted to remind the user. Alternatively, the processor 101 may indicate to notify the user through of voice broadcast. The specific alarm manner is not limited in this embodiment of this application.

In the state obtaining signal channels of the first memory 102, SSD_SDA is a data line, and SSD_SCL is a control line. A combination of the two may be used to read information such as temperature of the first memory 102.

The reset signal channel of the first memory 102 may be used to control reset of the first memory 102.

The clock request channel may be used by the first memory 102 to send a clock request signal to the processor 101, to implement clock synchronization between the first memory 102 and the processor 101.

The signal waiting channel is used by the first memory 102 to send a waiting signal to the processor 101, to indicate that the first memory 102 is not ready for further processing, and the processor 101 needs to wait.

V_STB_3V3_SSD shown in FIG. 2 indicates a power supply voltage signal, and is used to supply power to the connector.

The part connected to a pin P10 in FIG. 2 is configured to control lighting of the LED. After the first memory 102 is successfully inserted into the connector, the processor 101 may control the LED to light. The R3 and the R4 are used to control the LED to light. D1 is a transient voltage suppressor (transient voltage suppressor, TVS), to protect the circuit. In addition, resistors R5, R6, and R7 in FIG. 2 are optional, and optimized signal integrity may be obtained after the resistors are added. The resistor R8 is a pull-up resistor. D2 to D6 are transient voltage suppressors, to protect the circuit. In FIG. 2, GND indicates grounding.

It may be understood that the PCIE connector is merely an example, and does not constitute a limitation on this embodiment of this application.

In a specific implementation, the control system 100 may further include a clock module. The clock module may be configured to provide a clock signal for the processor 101 and the first memory 102. For ease of understanding, reference may be made to FIG. 4 as an example. It can be learned from FIG. 4 that the clock module 105 may include a crystal oscillator 1051 and a clock buffer (buffer) 1052. The crystal oscillator 1051 is configured to output a single-ended clock signal. The clock buffer 1052 is configured to convert the single-ended clock signal into differential clock signals. The single-ended clock signal refers to a signal transmitted on a signal line and a ground cable, and a signal transmitted on the signal line is the single-ended signal. The differential clock signals refer to clock signals that are transmitted on two lines and that have equal sizes and opposite polarities. That is, the clock signals transmitted on the two lines are the differential clock signals.

After converting the single-ended clock signal into the differential clock signals, the clock buffer 1052 outputs the differential clock signals in two channels, where one channel is output to the processor 101 and the other channel is output to the first memory 102. In FIG. 4, a dashed line arrow pointing to the first memory 102 by the clock buffer 1052 is merely used to indicate that one clock signal is output to the first memory 102, and does not indicate that the clock buffer is directly connected to the first memory 102. In a specific implementation, the differential clock signal output to the first memory 102 may be sent to the first memory 102 by using the connector 104. For ease of understanding, refer to the PCIE connector shown in FIG. 2. The PCIE connector includes a clock channel. Therefore, an output end of the clock buffer 1052 may be connected to two pins of the clock channel, that is, a pin P53 and a pin P55. Then, after the first memory 102 is inserted into the PCIE connector, the pin P53 and the pin P55 are connected to the first memory 102, so that one differential clock signal of the clock buffer 1052 is sent to the first memory 102.

In a possible implementation, the processor 101 may be configured to perform a control operation of intelligent driving or self-driving. For example, the control system 100 may be an intelligent assisted driving system in the vehicle. The processor 101 may be one or more control processors in the intelligent assisted driving system. The intelligent assisted driving system may include, for example, a lane keeping assistance system, an automatic parking assistance system, a braking assistance system, a reversing assistance system, and a driving assistance system. For example, the control system 100 may be a self-driving system in the vehicle. The processor 101 may be one or more control processors in the self-driving system. The self-driving system may be, for example, an advanced driving assistance system (advanced driving assistance system, ADAS). TheADAS system may include a plurality of different driving control technologies, for example, intelligent adaptive cruise, automatic emergency braking, traffic sign identification, blind spot detection, lane change assistance, lane departure warning, driver fatigue warning, front anti-collision assistance, a navigation system, a real-time traffic system, an electronic police system, an internet of vehicles system, and a downhill control system.

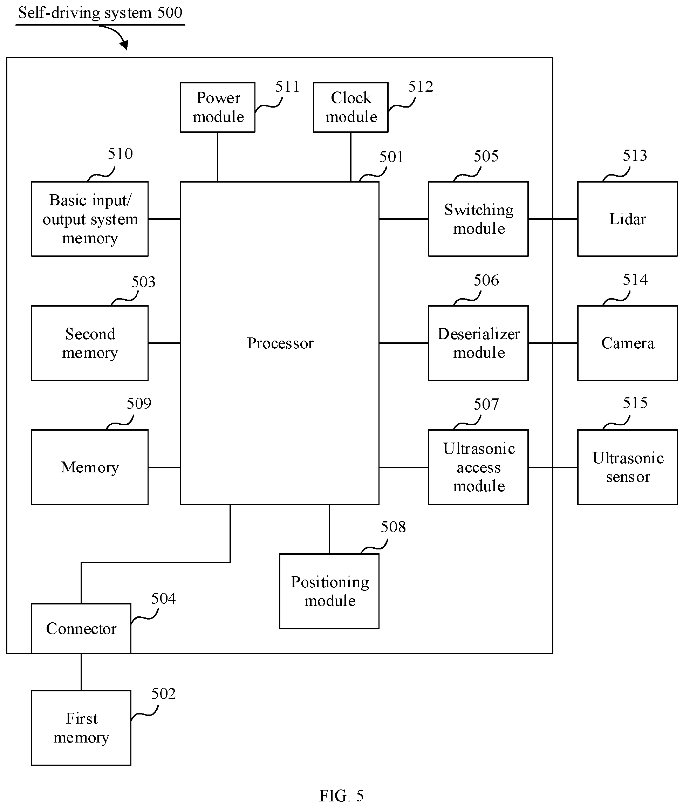

For ease of understanding, refer to FIG. 5. FIG. 5 is an example of a schematic diagram of a structure of a self-driving system 500 by using an example in which the control system 100 is a self-driving system. The self-driving system 500 includes a processor 501, and includes a first memory 502, a second memory 503, a switching module 505, a deserializer module 506, an ultrasonic access module 507, a positioning module 508, a memory 509, a basic input/output system memory 510, a power module 511, and a clock module 512 that are connected to the processor 501.

The processor 501 is a control core of the self-driving system 500, and is configured to control a vehicle to implement a self-driving operation. For a specific form of the processor 501, for example, refer to related descriptions of the processor 101 shown in FIG. 1. Details are not described herein again.

The first memory 502 is connected to the processor 501 by using a connector 504. The first memory 502 may be configured to store data with a high update frequency, for example, map data or road condition data. For a specific form of the first memory 502, for example, refer to related descriptions of the first memory 102 shown in FIG. 1. Details are not described herein again.

The second memory 503 may be fixedly connected to the processor 501. The second memory 503 may be configured to store data that has high security and reliability requirements, for example, system software or an application of the vehicle. For a specific form of the second memory 503, for example, refer to related descriptions of the second memory 103 shown in FIG. 1. Details are not described herein again.

The switching module 505 may be configured to implement a data switching processing function. For example, the switching module 505 may include a local area network switch (LAN switch, LSW) chip. For example, the switching module 505 may be connected to one or more lidars 513, to implement data exchange and transmission between the processor 501 and the lidar 513. The lidar 513 may be, for example, a light detection and ranging (light detection and ranging, LIDAR) apparatus. The apparatus may emit light to an object, and then receive reflected light by using a light sensor to measure a distance.

The deserializer module 506 may be connected to a camera 514, and is configured to quickly transmit data collected by the camera 514 to the processor 501 for processing.

The ultrasonic access module 507 may be connected to an ultrasonic sensor 515, and is configured to receive data from the ultrasonic sensor 515 and send the data to the processor 501 for processing.

The positioning module 508 may be configured to position a current position of the vehicle.

The memory 509 may be configured to store data and a computer program that are run by the processor 501.

The basic input/output system memory 510 may be configured to store a basic input/output system (basic input/output system, BIOS) program, a startup program of the self-driving system 500, and the like.

The power module 511 is configured to supply power to the self-driving system 500.

The clock module 512 is configured to manage a time sequence, a working frequency, and the like of the self-driving system 500, so that the self-driving system 500 can work in an orderly manner. Specifically, the clock module 512 is configured to provide a clock signal for the self-driving system 500. For the clock module 512, for example, reference may be made to related descriptions of the clock module 105 shown in FIG. 4, and details are not described herein again.

It may be understood that the self-driving system 500 is merely an example, and does not constitute a limitation on this embodiment of this application.

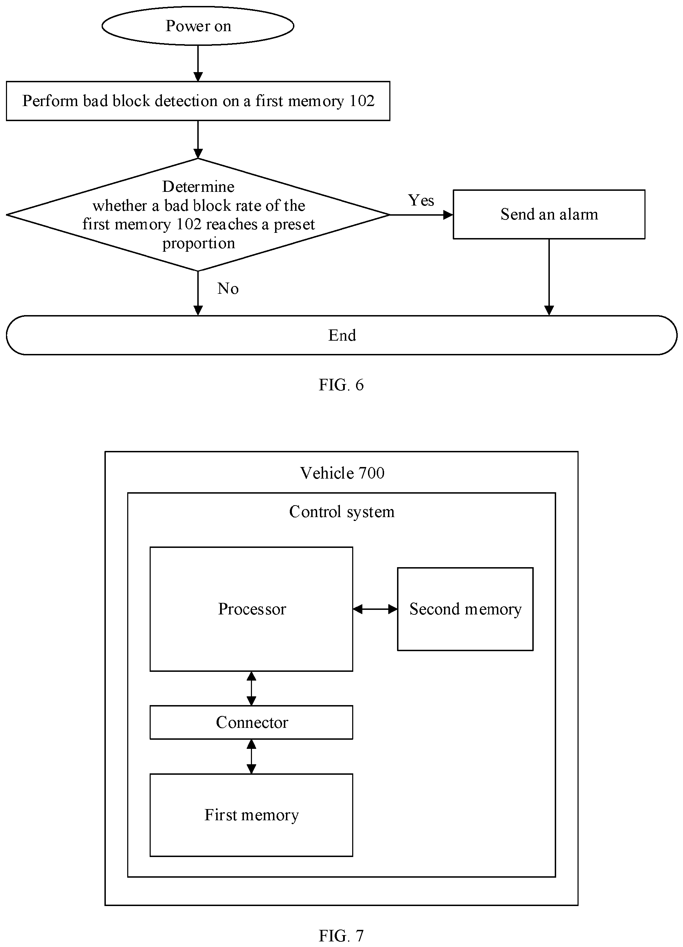

In a possible implementation, the processor 101 may perform bad block detection on the first memory 102. For example, refer to FIG. 6. After being powered on, the processor 101 may perform bad block detection on the first memory 102. For example, status information of each storage block (block) in the first memory 102 may be read, and whether the storage block is good or bad is determined based on the status information of the storage block. It may be understood that the bad block detection manner herein is merely an example, and does not constitute a limitation on this embodiment of this application. In this embodiment of this application, bad block detection may be implemented by using an existing bad block detection method. When determining that a bad block rate in the first memory 102 reaches a preset proportion, the processor 101 may send an alarm to indicate the user to replace the first memory 102. The bad block rate is a proportion of a quantity of bad blocks to a quantity of all storage blocks in the first memory 102. The preset proportion may be, for example, 10% or 15%. This is not limited in this embodiment of this application. For example, the processor 101 may send a message to the central control screen of the vehicle, and the central control screen displays replacement prompt information. Alternatively, the processor 101 may indicate to notify the user through of voice broadcast. The specific alarm manner is not limited in this embodiment of this application.

An embodiment of this application further provides a vehicle. For example, refer to FIG. 7. In FIG. 7, a vehicle 700 includes a control system, and the control system includes a processor, a first memory, and a second memory. The first memory is connected to the processor by using a connector. The first memory may be inserted into a connector in a pluggable manner to connect to the processor. The second memory is fixedly connected to the processor. For descriptions of the control system, refer to the foregoing descriptions. Details are not described herein again.

In conclusion, the control system of the vehicle includes a memory connected in a pluggable manner, so that the memory can be easily and quickly replaced in a timely manner. Therefore, data in the memory can be updated in a timely manner without considering a problem that a quantity of erase and write times of the memory is used up. This meets a storage requirement for a high data update frequency, and ensures accurate driving control and safe driving of an intelligent vehicle.

In this application, the terms "first", "second", and the like are used to distinguish between same or similar items whose effects and functions are basically the same. It should be understood that there is no logical or time-sequence dependency between "first", "second", and "n^{th}", and a quantity and an execution sequence are not limited. It should also be understood that although terms such as "first" and "second" are used in the following descriptions to describe various elements, these elements should not be limited by the terms. These terms are merely used to distinguish one element from another element.

It is to be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should further be understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A control system applied to a vehicle, wherein the control system comprises at least one processor, a first memory, and a second memory, the first memory is connected to the at least one processor in a pluggable manner, and the second memory is fixedly connected to the at least one processor; and
the first memory is configured to store first data, the second memory is configured to store second data, an update degree of the first data and an update degree of the second data are different, and the update degree comprises an update frequency and/or an importance degree.

2. The control system according to claim 1, wherein the first data comprises map data and/or road condition data.

3. The control system according to claim 2, wherein the first memory is further configured to store operating system software and/or an application of the vehicle.

4. The control system according to any one of claims 1 to 3, wherein the second data comprises the operating system software and/or the application of the vehicle.

5. The control system according to any one of claims 1 to 4, wherein the first memory and the second memory meet at least one of the following:
a storage capacity of the first memory is greater than a storage capacity of the second memory;
an update frequency of the first memory is higher than an update frequency of the second memory; and
an importance degree of the first data in the first memory is lower than an importance degree of the second data in the second memory.

6. The control system according to any one of claims 1 to 5, wherein the first memory is a solid state drive SSD memory card, and the second memory is a universal flash storage UFS memory.

7. The control system according to any one of claims 1 to 6, wherein the at least one processor is configured to perform intelligent driving or self-driving control.

8. The control system according to any one of claims 1 to 7, wherein the at least one processor is configured to send a first alarm signal when a bad block rate of the first memory reaches a preset proportion, wherein the first alarm signal is used to indicate to replace the first memory.

9. The control system according to claim 8, wherein that the at least one processor is configured to send a first alarm signal when a bad block occurs in the first memory comprises:
the at least one processor is configured to send the first alarm signal by using a central control screen of the vehicle when the bad block occurs in the first memory.

10. The control system according to any one of claims 1 to 9, wherein the at least one processor is configured to send a second alarm signal when the first memory is not successfully connected to the at least one processor, wherein the second alarm signal is used to indicate that the first memory is not successfully connected to the at least one processor.

11. The control system according to claim 10, wherein the first memory is connected to the at least one processor by using a connector, a first pin and a second pin that are comprised in the connector are connected to the first memory and the at least one processor, and the at least one processor is specifically configured to:
detect level signals of the first pin and the second pin; and
send the second alarm signal when at least one of the level signals of the first pin and the second pin is a low level signal.

12. A vehicle, wherein the vehicle comprises the control system according to any one of claims 1 to 11.
